(19) **Europäisches Patentamt**
**European Patent Office**
**Office européen des brevets**

(11) **EP 3 105 839 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **15701675.9**

(22) Anmeldetag: **29.01.2015**

(51) Int Cl.:
**B64C 13/50** (2006.01)   **H02K 1/24** (2006.01)
**H02K 1/27** (2006.01)

(86) Internationale Anmeldenummer:
**PCT/EP2015/000173**

(87) Internationale Veröffentlichungsnummer:
**WO 2015/120959 (20.08.2015 Gazette 2015/33)**

(54) **LUFTFAHRZEUG MIT EINER SYNCHRONRELUKTANZMASCHINE**

AIRCRAFT WITH A SYNCHRONOUS RELUCTANCE MACHINE

AÉRONEF AVEC UNE MACHINE À RÉLUCTANCE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.02.2014   DE 102014001855**
**25.09.2014   DE 102014014487**

(43) Veröffentlichungstag der Anmeldung:
**21.12.2016   Patentblatt 2016/51**

(73) Patentinhaber: **Liebherr-Aerospace Lindenberg GmbH**
**88161 Lindenberg (DE)**

(72) Erfinder:
• **LANGE, Tobias**
**52064 Aachen (DE)**

• **DE DONCKER, Rik W.**
**3000 Leuven (BE)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
EP-A1- 1 835 620        DE-A1-102008 057 391
GB-A- 2 444 838          JP-A- 2011 223 742
US-A1- 2003 111 927

**Beschreibung**

Die Erfindung betrifft ein Luftfahrzeug mit wenigstens einer Synchronreluktanzmaschine umfassend einen Stator mit einer Vielzahl an Nuten und Zähnen und einem Rotor mit einer Vielzahl an Magnetflussbarrieren.

Elektromotoren werden zur Steuerung bzw. Betätigung spezifischer Komponenten eines Luftfahrzeuges eingesetzt. Beispielsweise eignen sich derartige Motoren zur Steuerung der Luftauftriebsklappen eines Flugzeugs, es gibt jedoch zahlreiche weitere Anwendungsfälle innerhalb eines Luftfahrzeuges.

Als mögliche Motorart kommen Synchronreluktanzmaschinen zur Anwendung, deren Drehmoment auf Grundlage der Reluktanzkraft erzeugt wird. Dazu ist der Rotorquerschnitt in sogenannte Flussleit- und Flusssperrabschnitte unterteilt, die sich durch unterschiedliche magnetische Widerstände auszeichnen. Der Rotor selbst ist in der Regel aus leitfähigem Blech, insbesondere zur Vermeidung von Wirbelströmen aus einem Blechpaket gefertigt, wobei die Blechschnittgeometrie der einzelnen Blechschnitte jeweils mit Flussleit- und Flusssperrabschnitten versehen ist.

In der magnetischen Vorzugsrichtung (d-Richtung) tritt ein geringerer magnetischer Widerstand auf und der magnetische Fluss wird im Eisen gut geführt. In q-Richtung behindern die Magnetflusssperren den magnetischen Fluss. Aufgrund der Überlappung von Rotorzähnen und Rotorbarrieren mit Statorzähnen und Nuten entsteht bei derartigen Motortypen eine Drehmomentwelligkeit, wenn der Rotor gedreht wird. Diese Drehmomentwelligkeit kann zu unerwünschten Vibrationen und zu einer erhöhten Geräuschemission führen, was insbesondere bei Anwendungen der Luftfahrzeugtechnik zu vermeiden ist.

Eine Reduzierung der Drehmomentwelligkeit wurde bisher durch drei vorbekannte Verfahren erreicht. Zum Einen wurde versucht, dem Problem mit der auch von anderen Maschinentypen wie Asynchron- und Synchronmaschinen bekannten Maschinenschrägung beizukommen. Diese Vorgehensweise erfordert jedoch einen erhöhten Fertigungsaufwand, da die einzelnen Blechpakete der Maschinenabschnitte sehr genau auf der Welle positioniert werden müssen. Der Winkelversatz zwischen den einzelnen Abschnitten bestimmt die spätere Drehmomentwelligkeit der Maschine.

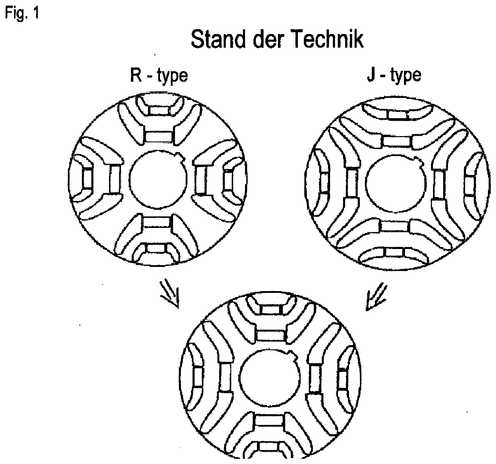

Alternativ wurde ein Verbund zweier unterschiedlicher Rotorgeometrien in Betracht gezogen. Hierbei werden zwei oder mehr unterschiedliche Barrierekonfigurationen des Rotors auf einer Welle vereint, um mittels Überlagerung der Barrierekonfigurationen das resultierende Drehmoment zu glätten. Ein Beispiel für die Kombination unterschiedlicher Rotorquerschnittgeometrien aus unterschiedlichen Barrierekonfigurationen ist in der Figur 1 gegeben. Die Geometrien R-type und J-type wurden zu einer neuartigen Geometrie vereint. Der resultierende Rotor weist insgesamt vier Flusssperrabschnitte mit einer Barrierenkonfiguration auf, wobei die gegenüberliegenden Barrierekonfigurationen identisch und die benachbarten Konfigurationen unterschiedlich ausgeführt sind.

Ferner existieren Rotorstrukturen, die durch die Lage des Rotorzahnes zum Statorzahn die Welligkeit des Drehmomentes reduzieren. Die bekannten Geometrien sind jedoch nicht punktsymmetrisch zur Rotationsachse aufgebaut, was im Motorbetrieb zu Unwucht und Vibrationen der Maschinen führen kann. Um dieser Problematik Herr zu werden, müssen daher einzelne Blechschnitte des Blechpaketes auf der Welle gegeneinander verdreht werden, um die Unwucht und Vibrationen zu kompensieren. Nachteilig an dieser Lösung ist jedoch, dass die entstehende Unwucht und Vibration der Maschine nur durch eine aufwendige Verdrehung der einzelnen Rotorbleche zueinander kompensiert werden können. Der Winkel der Verdrehung ist durch aufwendige Verfahren zu bestimmen, was den gesamten Aufbau sowie das Herstellungsverfahren des Rotors sehr aufwändig gestaltet.

Diese Tatsache wirkt sich insbesondere nachteilig für den Einsatz innerhalb eines Luftfahrzeuges aus, da Motorvibrationen wesentlichen Einfluss auf die Flugsicherheit des Luftfahrzeugs haben können und daher möglichst zu vermeiden sind. Jedoch soll zudem das Herstellungsverfahren bzw. die Anwendung derartiger Synchronreluktanzmaschinen innerhalb eines Luftfahrzeuges vereinfacht werden.

Einen Rotor für eine Synchronreluktanzmaschine mit asymmetrischen Flussbarrieren ist aus der US 2003/0111927 A1 bekannt.

Die Aufgabe der vorliegenden Erfindung besteht darin, ein Luftfahrzeug mit einer Synchronreluktanzmaschine aufzuzeigen, wobei sich der Rotor durch eine optimierte Querschnittgeometrie auszeichnet, die in effizienter Weise die Drehmomentwelligkeit und die damit verbundene Vibration der Maschine zu vermeiden weiß.

Gelöst wird diese Aufgabe durch ein Luftfahrzeug mit wenigstens einer Synchronreluktanzmaschine gemäß den Merkmalen des Anspruchs 1. Vorteilhafte Ausgestaltungen des Luftfahrzeuges sind Gegenstand der abhängigen Ansprüche.

Gegenüber den bekannten Rotorquerschnittgeometrien zeichnet sich der erfindungsgemäße Rotor nun dadurch aus, dass wenigstens eine Magnetflussbarriere zur q-Achse asymmetrisch ausgestaltet ist. Der Durchschnitt der magnetischen Reluktanz wirkt damit unabhängig von der Position des Rotors konstant, so dass die Drehmomentwelligkeit verringert wird. Damit lässt sich der Motor auf stabile Weise betreiben. Im Gegensatz zum Stand der Technik besticht der Rotor jedoch durch eine einfache Struktur der Blechschnittgeometrie und der Zusammensetzung auf der Rotorwelle. Dadurch vereinfacht sich die Produktion und die Kosten der Herstellung können gezielt verringert werden.

Bei Rotorstrukturen, die aus wenigstens zwei Segmenten bestehen, wird die Welligkeit allein durch deren Überlagerung reduziert, sofern wenigstens eine Flusssperre asymmetrisch ausgebildet ist.

Bei einem Luftfahrzeug werden sinnvollerweise Synchronreluktanzmaschinen für Anwendungen mit einer Leistungsklasse gleich oder unterhalb 5 kW eingesetzt, da sich diese bei derartigen Leistungsklassen durch eine besonders effiziente Betriebsweise auszeichnen.

Als typisches Anwendungsprofil von Synchronreluktanzmotoren innerhalb eines Luftfahrzeuges sind Redundante Antriebe, Stichwort "torque summing", denkbar, da bei möglichen Motorfehlern einer Seite, insbesondere in der Motorenwicklung, keine unerwünschten Folgeerscheinungen wie Kurzschlüsse, Schleppmomente, Induzierungen etc. auftreten.

Allgemeine Anwendungsschwerpunkte liegen grundsätzlich bei sämtlichen elektrische Aktuatoren eines Luftfahrzeuges, insbesondere bei elektromechanische Antrieben der Flugsteuerung, sowie der Fahrwerks-Betätigung und Lenkung oder auch zur Steuerung eines Hochauftriebssystem des Luftfahrzeuges.

Besonders bevorzugt ist es, wenn sich durch die asymmetrische Ausgestaltung wenigstens einer Flussbarriere unabhängig von der Rotorposition ergibt, dass ein Flussbarrierenende der wenigstens einen Flussbarriere im Wesentlichen einer Statornut des Stators und das entgegengesetzte Ende der Flussbarriere im Wesentlichen einem Statorzahn gegenüberliegt. Besonders bevorzugt liegt wenigstens ein Ende vollständig einer Statornut und das entgegengesetzte Ende vollständig einem Statorzahn gegenüber. Meist liegt jedoch das Barrierenende nahe eine Nut bzw. Zahnung.

In einer bevorzugten Ausgestaltung der Erfindung weist der Stator eine Vielzahl an regelmäßig beabstandeten Nuten und Zähnen auf.

Die asymmetrische Ausgestaltung der wenigstens einen Flussbarriere wird erfindungsgemäß dadurch erreicht, dass die Flussbarrierewinkel wenigstens einer Magnetflussbarriere ungleich gewählt sind. Dies bedeutet, dass beispielsweise ein Ende der Magnetflussbarriere in Richtung der q-Achse geneigt und das entgegengesetzte Ende von der q-Achse entfernt, d. h. weiter in Richtung der d-Achse geneigt ist. Ausgehend von einem symmetrischen Bezugswinkel für beide Barriereenden wird einmal der Winkel erhöht und für das gegenüberliegende Barriereende der Winkel verringert. Dies hat zur Folge, dass die Barrierenenden unabhängig von der Rotorstellung jeweils in etwa einem Statorzahn und andererseits einer Statornut gegenüberstehen.

Idealerweise werden die Variationsbereiche der Flussbarrierewinkel wenigstens einer Magnetflussbarriere durch die folgenden Gleichungen festgelegt:

$$\Delta\theta_{Stator} = \frac{360°}{N_{Ständernut}} \qquad (1)$$

$$\theta_{1,max} = \theta_{sym} + \Delta\theta_{Stator} \qquad (2)$$

$$\theta_{2,min} = \theta_{sym} - \Delta\theta_{Stator} \qquad (3)$$

$$\Delta\theta_{Stator} \geq \frac{|\theta_1 - \theta_2|}{2} \qquad (4)$$

wobei $\theta_{1,max/2,min}$ die Grenzwerte für die ungleichen Flussbarrierewinkel, $\theta_{sym}$ der symmetrische Bezugswinkel, vorzugsweise 135° bei einem 4-poligen Rotor und $\Delta\theta_{stator}$ die Nutteilung des Stators darstellt.

Aus den vorliegenden Gleichungen ergibt sich, dass die erfindungsgemäße Vorgehensweise zur Reduzierung der Drehmomentwelligkeit unabhängig von der Polpaarzahl und der Flussbarrierenzahl bzw. der Statornutenzahl der Reluktanzmaschine des Luftfahrzeuges ist.

Eine effektive Anpassung der durchschnittlichen Reluktanz des Rotors wird idealerweise dadurch erreicht, dass zumindest die innerste Magnetflussbarriere einer Rotorlücke asymmetrisch ausgeführt ist. Als innerste Flussbarriere wird diejenige Barriere verstanden, die pro Magnetflusssperrabschnitt am nächsten zum Rotormittelpunkt liegt und dadurch den größten Öffnungswinkel aufweist. Die Endpunkte dieser Barrieren überdecken bzw. überlappen vorzugsweise statorseitig mit dem einen Endpunkt eine Nutöffnung und mit einen Endpunkt einen Statorzahn.

Idealerweise sind alle Flussbarrieren einer Rotorlücke, d.h. eines Flusssperrabschnittes, asymmetrisch ausgeführt, wobei sich für die unterschiedlichen Flussbarrieren identische oder ungleiche Winkel verwenden lassen. Sinnvollerweise sind alle Flussbarrieren des Rotorquerschnittes asymmetrisch. Idealweise sind die inneren und äußeren Flusssperren parallel zueinander, wodurch der magnetische Fluss und das Sättigungsverhalten des Rotors nahezu konstant gehalten werden können.

In einer besonders bevorzugten Ausgestaltung ist der Rotorquerschnitt punktsymmetrisch zur Rotationsachse, d.h. die Flusssperrabschnitte sind punktsymmetrisch zur Rotationsachse. Durch die Punktsymmetrie kann die aus dem Stand der Technik bekannte Unwucht und Vibration von vornherein vermieden werden und auf eine komplizierte Anordnung bzw. Verdrehung der Bleche auf der Rotorwelle prinzipiell verzichtet werden.

Zur weiteren Reduzierung der Drehmomentwelligkeit ist es zweckmäßig, wenn der Rotor in Axialrichtung in ein oder mehrere Segmente unterteilt ist, wobei ein Teil der Rotorsegmente um die Z-Achse geklappt auf die Rotorwelle montiert ist, insbesondere um 180° um die Z-Achse geklappt. Besonders bevorzugt besteht der gesamte Rotoraufbau aus identisch aufgebauten Blechschnitten, wobei ein Teil der Blechschnitte zu diversen Segmenten zusammengefasst ist und die jeweiligen Segmente um 180° geklappt zueinander auf der Rotorwelle angeordnet sind.

Durch das Aufbringen der Blechpakte auf die Rotorwelle wird das resultierende Gesamtdrehmoment überlagert, die Welligkeit des Drehmoments hebt sich jedoch durch die Phasenverschiebung auf. Durch die ungleiche und unsymmetrischen Ausgestaltung der wenigstens einen Flussbarriere bleibt das mittlere Drehmoment jedoch nahezu unverändert. Änderungen im Bereich von < 5% sind dabei tolerierbar. Besonders bevorzugt sind die Flussbarrierewinkel derart gewählt, dass eine Phasenverschiebung der Statornutharmonischen und gegebenenfalls höher Harmonischen in den einzelnen Segmenten um ca. 180° erreicht wird.

Weitere Vorteile und Eigenschaften der Erfindung sollen im Folgenden anhand eines in den Zeichnungen dargestellten Ausführungsbeispiels näher erläutert werden. Es zeigen:

Figur 1: eine Darstellung der gemäß dem Stand der Technik vorgeschlagenen Barrierengeometrie, bei dem zwei unterschiedlichen Barrierenkonfigurationen zu einer modifizierten Geometrie zusammengefasst sind,

Figur 2: eine Darstellung des erfindungsgemäßen Blechschnitts sowie eines umgeklappten Blechschnittes,

Figur 3: eine Draufsicht und Seitenansicht der Rotorsegmente gemäß der vorliegenden Erfindung und

Figur 4: eine Draufsicht auf den Rotorquerschnitt bzw. Statoraufbau mit der eingezeichneten Winkelzuordnung von Rotorflussbarrieren und Statorzahn.

Im Folgenden soll der erfindungsgemäße Aufbau des Synchronreluktanzmotors näher dargestellt werden, wie er in einem Luftfahrzeug gemäß der vorliegenden Erfindung zum Einsatz kommt. Der Synchronreluktanzmotor dient beispielsweise zur Steuerung einer Klappenkinematik eines Flugzeuges. Insbesondere kommt die Verwendung des Motors in der elektrischen PCU in Betracht, die die zentrale Antriebseinheit eines Hochauftriebssystems darstellt. Es sind jedoch auch andere Anwendungsschwerpunkte denkbar, insbesondere für sämtliche elektrische Aktuatoren des Luftfahrzeuges, so zum Beispiel elektromechanische Antriebe der Flugsteuerung, sowie der Fahrwerksbetätigung (Ein- und Ausfahren) bzw. der Lenkung.

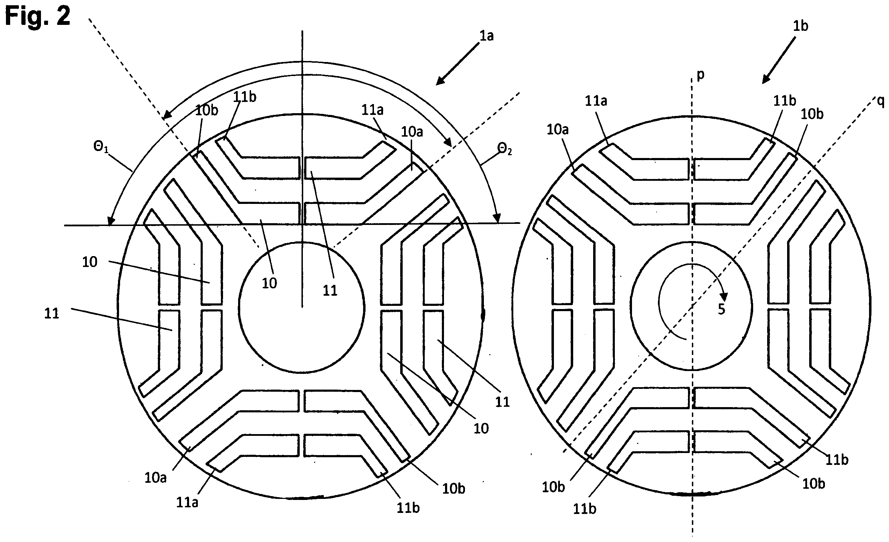

Figur 2 zeigt den erfindungsgemäßen Aufbau des Rotors im Querschnitt, wobei zwei Blechschnitte 1a, 1b dargestellt sind. Der Rotor 1 wird in der Regel aus einer Vielzahl an Elektroblechen 1a, 1b zu einem Blechpaket gestapelt, wobei die einzelnen Elektrobleche den in der Figur 2 dargestellten Aufbau aufweisen. Im Einzelnen zeigt der Querschnitt 1a, 1b der Figur 2 einen vierpoligen Rotoraufbau mit insgesamt vier Flusssperrabschnitten, wobei jeder Flusssperrabschnitt zwei Magnetflussbarrieren 10, 11 aufweist. Die vier Flusssperrabschnitte sind identisch, d.h. die Flussbarrieren 10, 11 der Abschnitte sind identisch ausgestaltet, wodurch sich eine Punktsymmetrie des Rotorquerschnittes bezüglich der Rotationsachse 5 ergibt. Insbesondere ist erkennbar, dass die Punktsymmetrie zu jedem gegenüberliegenden magnetischen Pol punktsymmetrisch ist.

Die Flussbarrieren 10, 11 selbst sind asymmetrisch gestaltet, wobei die Ungleichheit der jeweiligen Magnetflussbarrierewinkel $\theta_{1/2}$ einer Flussbarriere 10, 11 und die daraus resultierende Asymmetrie zur q-Achse erkennbar ist. Als Magnetflussbarrierewinkel $\theta_{1/2}$ wird der Winkel verstanden, den die äußeren Enden 10a, 10b, 11a, 11b einer Flussbarriere 10, 11, insbesondere die Außenkante der äußeren Enden, zum geradlinigen Mittelteil der Flussbarriere einnehmen.

Für jede Magnetflussbarriere 10, 11 wird der gewählte Magnetflusswinkel $\theta_{1/2}$ gegenüber einem symmetrischen Barrierewinkel $\theta_{sym}$ um einen bestimmten Betrag reduziert bzw. vergrößert. Als symmetrischer Barrierewinkel $\theta_{sym}$ wird ein ursprünglicher Ausgangs- bzw. Bezugswinkel verstanden, den die äußeren Enden einer symmetrischen Barriere gegenüber der q-Achse üblicherweise einnehmen. Bei einer symmetrischen Barriere wäre der Winkel für beide Enden identisch und würde vorzugsweise 135° betragen.

Ausgehend von diesem symmetrischen Bezugswinkel $\theta_{sym}$ wird der Winkel $\theta_2$ des einen Barriereendes 10a, 11a um einen spezifischen Winkelbetrag vergrößert, während der Winkel $\theta_1$ des entgegengesetzten Endes 10b, 11b um einen spezifischen Winkelwert verringert wird. Die Winkeländerungen für $\theta_{1/2}$ sind in der Regel nicht betragsgleich, gleichwohl dies jedoch nicht auszuschliessen ist.

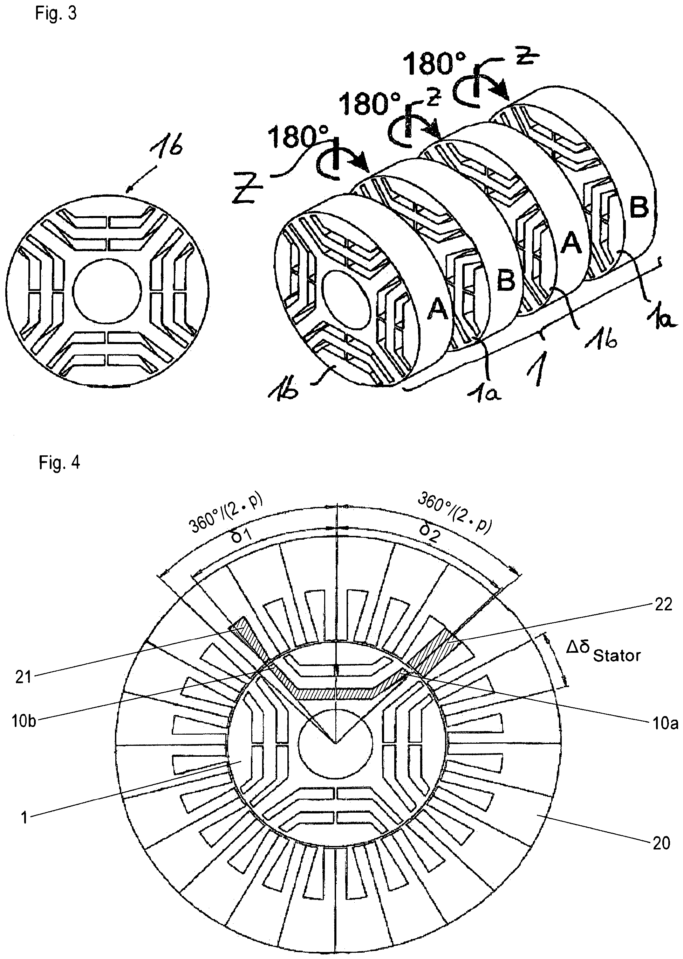

Wichtig ist die Lage der Flussbarriereenden 10a, 10b der innersten Barriere 10, da diese den größten Öffnungswinkel besitzen und den geringsten Abstand zum Mittelpunkt der Rotordrehachse 5 aufweisen. Figur 4 zeigt die Lage des Rotors 1 zum Stator 20. Die Endpunkte 10a, 10b der innersten Barriere 10 überdecken statorseitig mit dem einen Endpunkt 10b eine Nutöffnung 21 und mit dem anderen Endpunkt 10a einen Statorzahn 22. In Figur 4 sind die Öffnungswinkel $\delta_1'$, $\delta_2'$ der Flussbarriere 10 eingezeichnet.

Um diese Voraussetzung zu erfüllen muss ein zulässiger Bereich für die Anpassung der Barrierewinkeländerungen gefunden werden. Hierzu lassen sich die nachfolgenden Gleichungen verwenden:

$$\Delta\theta_{Stator} = \frac{360°}{N_{Ständernut}} \qquad (1)$$

$$\theta_{1,max} = \theta_{sym} + \Delta\theta_{Stator} \qquad (2)$$

$$\theta_{2,min} = \theta_{sym} - \Delta\theta_{Stator} \qquad (3)$$

$$\Delta\theta_{Stator} \geq \frac{|\theta_1 - \theta_2|}{2} \qquad (4)$$

wobei der Winkel $\Delta\theta_{Stator}$ hier die Nutteilung des Stators 20 darstellt. Es wird als für den Barrierewinkel $\theta_1$ ein Maximalwert $\theta_{1,max}$ definiert, wobei $\theta_1 < \theta_{1,max}$ gilt und für den zweiten Barrierewinkel $\theta_2$ ein Mindestwinkel $\theta_{2,min}$ festgelegt, wobei hier $\theta_2 > \theta_{2,min}$ gilt.

Damit darf der Winkel $\theta_2$ eines ursprünglich symmetrischen Barriereendes 10a maximal um den Winkel $\Delta\theta_{Stator}$ verringert werden, während gleichzeitig der Winkel $\theta_1$ des gegenüberliegenden Endes 10b maximal um den Winkel $\Delta\theta_{Stator}$ erhöht wird.

Für die gewählten Winkel $\theta_1$, $\theta_2$ gilt dann folgendes:

$$\Delta\theta_{Stator} \geq \frac{|\theta_2 - \theta_1|}{2}$$

Aus der Darstellung der Figur 4 wird weiter deutlich, dass sich der Stator 20 durch eine beliebige Anzahl an Statorzähnen 22 bzw. Statornuten 21 auszeichnet, wobei der Abstand zwischen den einzelnen Nuten bzw. Zähnen über den Statorumfang konstant ist.

Zur weiteren Reduktion der Drehmomentwelligkeit müssen sich die auftretenden harmonischen Flusskomponenten gegenseitig auslöschen. Dazu wird der Rotor 1 zusätzlich in axialer Richtung in zwei oder mehr Segmente A, B unterteilt, wie es beispielsweise der Figur 3 zu entnehmen ist. Die einzelne Segmente A, B können sich durch ein oder mehrere Blechschnitte 1a, 1b auszeichnen, wobei innerhalb eines Segmentes A, B die einzelnen Bleche identisch ausgestaltet sind und mit gleicher Orientierung auf der Rotorwelle montiert werden. Die Segmente A, B verwenden zwar identische Blechschnitte, allerdings unterscheidet sich deren Orientierung auf der Rotorwelle.

Beispielsweise verwendet das Segment A die Blechschnitte 1b in der dargestellten Orientierung. Wird diese Blechschnittgeometrie um die Z-achse um 180° geklappt, so erhält man die Blechschnittgeometrie 1a, wie sie in Figur 2 und auch Figur 3 gezeigt ist. Alle Blechschnitte der Segmente B verwenden dabei die Orientierung auf der Welle gemäß der Darstellung 1a.

Die Anordnung der einzelnen Magnetflussbarrieren 10, 11 weist im Gegensatz zum Stand der Technik eine Punktsymmetrie bezüglich der Rotationsachse 5 auf. Durch die geeignete Wahl der Flussbarrierewinkel $\theta_{1/2}$ kann eine genau definierte Phasenlage der Drehmomentwelligkeit eingestellt werden. In Verbindung mit einer Segmentierung der Maschine in n-Anteile A, B, wobei n eine gerade Zahl ist, und Umklappen der Segmenthälften A, B gegeneinander, kann die Drehmomentwelligkeit erheblich reduziert werden. Die Drehmomente der einzelnen Segmente A, B werden auf der Welle addiert und führen aufgrund der Überlagerung zu geringerer Welligkeit, d.h. durch das Aufbringen der Blechpakete gemäß den Segmenten A, B auf die Rotorwelle wird das resultierende Gesamtdrehmoment überlagert, die Welligkeit des Drehmomentes hebt sich hierdurch durch die Phasenverschiebung auf. Aufgrund der asymmetrischen Ausführung der Flussbarrierewinkel $\theta_{1/2}$ bleibt das mittlere Drehmoment nahezu unverändert.

Figur 3 zeigt eine Anordnung A, B, A, B, so dass jeweils benachbart angeordnete Segmente A, B um 180° gedreht sind. Es sind jedoch beliebige Konfigurationen denkbar, wie beispielsweise ABBA, ABBAABBA oder BAABBAAB. Die vorliegende Erfindung soll jedoch keinesfalls auf eine konkrete Konfiguration beschränkt sein.

**Patentansprüche**

1. Luftfahrzeug mit wenigstens einer Synchronreluktanzmaschine, die einen Stator (20) mit einer Vielzahl an Nuten (21) und Zähnen (22) und einen Rotor (1) mit einer Vielzahl an Magnetflussbarrieren (10, 11) umfasst, wobei die Magnetflussbarrieren (10, 11) aus einem geradlinigen Mittelteil und zwei geradlinigen äußeren Enden bestehen, wobei die Außenkanten der geradlinigen äußeren Enden zum geradlinigen Mittelteil der jeweiligen Magnetflussbarrieren (10, 11) jeweils einen Magnetflussbarrierewinkel θ1 und θ2 einnehmen, **dadurch gekennzeichnet, dass** wenigstens eine der Magnetflussbarrieren (10, 11) asymmetrisch zur q-Achse ausgestaltet ist, indem die Magnetflussbarrierewinkel $\theta_1$ und $\theta_2$ der wenigstens einen Magnetflussbarriere ungleich sind.

2. Luftfahrzeug nach einem der vorhergehenden Ansprüche, **dadurch gekennzeichnet, dass** zumindest die ein oder mehreren radial innersten Magnetflussbarrieren (10) asymmetrisch zur q-Achse ausgestaltet sind.

3. Luftfahrzeug nach einem der vorhergehenden Ansprüche, **dadurch gekennzeichnet, dass** die Flussbarrierewinkel der wenigstens einen Magnetflussbarriere (10, 11) derart gewählt sind, so dass ein Flussbarriereende (10b) ungefähr über einer Statornut (21) und das entgegengesetzte Ende (10a) ungefähr über einem Statorzahn (22) liegt.

4. Luftfahrzeug nach einem der vorhergehenden Ansprüche, **dadurch gekennzeichnet, dass** die Flussbarrierewinkel der wenigstens einen Magnetflussbarriere (10, 11) durch die folgenden Gleichungen definiert sind:

$$\Delta\theta_{Stator} = \frac{360°}{N_{Ständernut}} \qquad (1)$$

$$\theta_{1,max} = \theta_{sym} + \Delta\theta_{Stator} \qquad (2)$$

$$\theta_{2,min} = \theta_{sym} - \Delta\theta_{Stator} \qquad (3)$$

$$\Delta\theta_{Stator} \geq \frac{|\theta_1 - \theta_2|}{2} \qquad (4)$$

wobei $\theta_{1/2}$ die ungleichen Flussbarrierewinkel sind und $\theta_{1,max}$ einen Maximalwert für den ersten Flussbarrierewinkel festlegt, $\theta_{2,min}$ einen Minimalwert für den zweiten Flussbarrierewinkel definiert, $\theta_{sym}$ ein symmetrischer Bezugswinkel und $\Delta\theta_{stator}$ die Nutteilung des Stators (20) darstellt.

5. Luftfahrzeug nach einem der vorhergehenden Ansprüche, **dadurch gekennzeichnet, dass** die Magnetflussbarrierenanordnung des Rotorquerschnitts punktsymmetrisch zur Rotationsachse (5) des Rotors (1) ist, insbesondere je magnetischem Pol punktsymmetrisch zur Rotationsachse (5).

6. Luftfahrzeug nach einem der vorhergehenden Ansprüche, **dadurch gekennzeichnet, dass** der Rotor (1) in Axialrichtung in ein oder mehrere Segmente (A, B) unterteilt ist, wobei ein Teil der Rotorsegmente (A, B) um die Z-Achse geklappt auf die Rotorwelle montiert ist.

7. Luftfahrzeug nach Anspruch 6, **dadurch gekennzeichnet, dass** die Anzahl der Segmente (A, B) geradzahlig oder nicht gradzahlig ist.

8. Luftfahrzeug nach Anspruch 6 oder 7, **dadurch gekennzeichnet, dass** ein oder mehrere Rotorsegmente (A, B) ein oder mehrere Blechschnitte (1a, 1b) eines Rotorpaketes umfassen.

9. Luftfahrzeug nach Anspruch 8, **dadurch gekennzeichnet, dass** das Rotorpaket aus identischen Blechschnitten (1a) aufgebaut ist und benachbarte Blechschnitte um 180° zur Z-Achse verklappt auf der Rotorwelle angeordnet sind.

10. Luftfahrzeug nach einem der vorhergehenden Ansprüche, **dadurch gekennzeichnet, dass** der Stator (20) eine Vielzahl an regelmäßig beabstandeten Nuten (21) und Zähnen (22) aufweist.

**11.** Luftfahrzeug nach einem der vorhergehenden Ansprüche, wobei die wenigstens eine Synchronreluktanzmaschine als Antrieb für wenigstems einen elektrischen Aktuator dient, insbesondere als zentraler Antrieb für ein Hochauftriebssystem und/oder als elektromechanischer Antrieb der Flugsteuerung und/oder der Fahrwerksbetätigung und/oder -lenkung.

**Claims**

**1.** Aircraft with at least one synchronous reluctance machine, which comprises a stator (20) with a plurality of slots (21) and teeth (22) and a rotor (1) with a plurality of magnetic flux barriers (10, 11), wherein the magnetic flux barriers (10, 11) consist of a straight central part and two straight outer ends, wherein the outside edges of the straight outer ends each take up a magnetic flux barrier angle $\Theta_1$ and $\Theta_2$ relative to the straight central part of the respective magnetic flux barriers (10, 11), **characterised in that** at least one of the magnetic flux barriers (10, 11) is configured asymmetrically to the q-axis, **in that** the magnetic flux barrier angles $\Theta_1$ and $\Theta_2$ of the at least one magnetic flux barrier are unequal.

**2.** Aircraft according to one of the preceding claims, **characterised in that** at least the one or more radially innermost magnetic flux barriers (10) are configured asymmetrically to the q-axis.

**3.** Aircraft according to one of the preceding claims, **characterised in that** the flux barrier angles of the at least one magnetic flux barrier (10, 11) are selected so that a flux barrier end (10b) lies approximately above a stator slot (21) and the opposite end (10a) lies approximately above a stator tooth (22).

**4.** Aircraft according to any one of the preceding claims, **characterised in that** the flux barrier angles of the at least one magnetic flux barrier (10, 11) are defined by the following equations:

$$\Delta\theta_{Stator} = \frac{360°}{N_{Ständernut}} \qquad (1)$$

$$\theta_{1,max} = \theta_{sym} + \Delta\theta_{Stator} \qquad (2)$$

$$\theta_{2,min} = \theta_{sym} - \Delta\theta_{Stator} \qquad (3)$$

$$\Delta\theta_{Stator} \geq \frac{|\theta_1 - \theta_2|}{2} \qquad (4)$$

wherein $\Theta_{1/2}$ are the unequal flux barrier angles and $\Theta_{1,\,max}$ defines a maximum value for the first flux barrier angle, $\Theta_{2,\,min}$ defines a minimal value for the second flux barrier angle, $\Theta_{sym}$ represents a symmetrical reference angle and $\Delta\Theta_{Stator}$ represents the slot pitch of the stator (20).

**5.** Aircraft according to any one of the preceding claims, **characterised in that** the magnetic flux barrier arrangement of the rotor cross section is point-symmetric to the axis of rotation (5) of the rotor (1), in particular point-symmetric to the axis of rotation (5) per magnetic pole.

**6.** Aircraft according to any one of the preceding claims, **characterised in that** the rotor (1) is divided in an axial direction into one or more segments (A, B), wherein a portion of the rotor segments (A, B) is mounted on the rotor shaft folded about the Z-axis.

**7.** Aircraft according to claim 6, **characterised in that** the number of segments is even or not even.

**8.** Aircraft according to claim 6 or 7, **characterised in that** one or more rotor segments (A, B) comprise one or more laminations (1a, 1b) of a rotor stack.

9. Aircraft according to claim 8, **characterised in that** the rotor stack is constructed of identical laminations (1a) and adjacent laminations are arranged on the rotor shaft folded by 180° to the Z-axis.

10. Aircraft according to any one of the preceding claims, **characterised in that** the stator (20) has a plurality of regularly spaced slots (21) and teeth (22).

11. Aircraft according to any one of the preceding claims, wherein the at least one synchronous reluctance machine serves as a drive for at least one electric actuator, in particular as a central drive for a high-lift system and/or as an electromechanical drive of the flight control and/or the landing gear operation and/or control.

**Revendications**

1. Aéronef avec au moins une machine à réluctance synchrone, qui comprend un stator (20) avec une pluralité de rainures (21) et de dents (22) et un rotor (1) avec une pluralité de barrières de flux magnétique (10, 11), dans lequel les barrières de flux magnétique (10, 11) sont constituées d'une partie centrale rectiligne et de deux extrémités extérieures rectilignes, dans lequel les bords extérieurs des extrémités extérieures rectilignes adoptent par rapport à la partie centrale rectiligne des barrières de flux magnétiques (10, 11) respectives respectivement un angle de barrière de flux magnétique θ1 et θ2, **caractérisé en ce qu'**au moins une des barrières de flux magnétique (10, 11) est configurée de manière asymétrique par rapport à l'axe q **en ce que** les angles de barrière de magnétique $\theta_1$ et $\theta_2$ de l'au moins une barrière de flux magnétique ne sont pas égaux.

2. Aéronef selon l'une quelconque des revendications précédentes, **caractérisé en ce qu'**au moins la ou plusieurs barrières de flux magnétique (10) le plus à l'intérieur radialement sont configurées de manière asymétrique par rapport à l'axe q.

3. Aéronef selon l'une quelconque des revendications précédentes, **caractérisé en ce que** les angles de barrière de flux de l'au moins une barrière de flux magnétique (10, 11) sont choisis de telle manière qu'une extrémité de barrière de flux (10b) se situe approximativement au-dessus d'une rainure de stator (21) et l'extrémité opposée (10a) se situe approximativement au-dessus d'une dent de stator (22).

4. Aéronef selon l'une quelconque des revendications précédentes, **caractérisé en ce que** les angles de barrière de flux de l'au moins une barrière de flux magnétique (10, 11) sont définis par les équations suivantes :

$$\Delta\theta_{Stator} = \frac{360°}{N_{St\ddot{a}ndernut}} \qquad (1)$$

$$\theta_{1,max} = \theta_{sym} + \Delta\theta_{Stator} \qquad (2)$$

$$\theta_{2,min} = \theta_{sym} - \Delta\theta_{Stator} \qquad (3)$$

$$\Delta\theta_{Stator} \geq \frac{|\theta_1 - \theta_2|}{2} \qquad (4)$$

dans lequel $\theta_{1/2}$ sont les angles de barrière de flux inégaux et $\theta_{1,max}$ fixe une valeur maximale pour le premier angle de barrière de flux, $\theta_{2,min}$ définit une valeur minimale pour le deuxième angle de barrière de flux, $\theta_{sym}$ représente un angle de référence symétrique et $\Delta_{\theta stator}$ représente le pas de rainure du stator (20).

5. Aéronef selon l'une quelconque des revendications précédentes, **caractérisé en ce que** l'ensemble de barrières de flux magnétique de la section transversale de rotor est symétrique en un point par rapport à l'axe de rotation (5) du rotor (1), en particulier par pôle magnétique symétrique en un point par rapport à l'axe de rotation (5).

6. Aéronef selon l'une quelconque des revendications précédentes, **caractérisé en ce que** le rotor (1) est divisé dans une direction axiale en un ou plusieurs segments (A, B), dans lequel une partie des segments de rotor (A, B) est montée sur l'arbre de rotor de manière rabattue autour de l'axe Z.

7. Aéronef selon la revendication 6, **caractérisé en ce que** le nombre des segments (A, B) est pair ou impair.

8. Aéronef selon la revendication 6 ou 7, **caractérisé en ce qu'**un ou plusieurs segments de rotor (A, B) comprennent une ou plusieurs coupes de tôle (1a, 1b) d'un paquet rotorique.

9. Aéronef selon la revendication 8, **caractérisé en ce que** le paquet rotorique est élaboré à partir de coupes de tôle (1a) identiques et des coupes de tôle adjacentes sont déversées sur l'arbre de rotor selon un angle de 180° par rapport à l'axe Z.

10. Aéronef selon l'une quelconque des revendications précédentes, **caractérisé en ce que** le stator (20) présente une pluralité de rainures (21) et de dents (22) espacées régulièrement.

11. Aéronef selon l'une quelconque des revendications précédentes, dans lequel l'au moins une machine à réluctance synchrone fait office d'entraînement pour au moins un actionneur électrique, en particulier d'entraînement central pour un système d'hypersustentation et/ou d'entraînement électromécanique de la commande de vol et/ou de l'actionnement et/ou de la direction du train de roulement.

Fig. 1

# Stand der Technik

R - type                    J - type

**Fig. 3**

**Fig. 4**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030111927 A1